# EUROPÄISCHE PATENTSCHRIFT

(11) **EP 2 867 060 B1**
(45) Veröffentlichungstag und Bekanntmachung des Hinweises auf die Patenterteilung: **26.09.2018**
(21) Anmeldenummer: 13736504.5
(22) Anmeldetag: 20.06.2013
(51) Int. Cl.: B60N 2/80

(54) **BEFESTIGUNGSANORDNUNG, KOPFSTÜTZE UND MONTAGEVERFAHREN**
FASTENING ARRANGEMENT, HEADREST AND ASSEMBLY METHOD
SYSTÈME DE FIXATION, APPUI-TÊTE ET PROCÉDÉ DE MONTAGE

(30) Priorität: 27.06.2012 DE 102012012684
(43) Veröffentlichungstag der Anmeldung: 06.05.2015
(73) Patentinhaber: Adient Luxembourg Holding S.à r.l., 1855 Luxembourg (LU)
(72) Erfinder: MANDUZIO, Felix, F-67100 Strasbourg (FR); MORINIÈRE, Christophe, F-67810 Holtzheim (FR)
(74) Vertreter: Loock, Jan Pieter
(86) Internationale Anmeldenummer: PCT/EP2013/062917
(87) Internationale Veröffentlichungsnummer: WO 2014/001199

(56) Entgegenhaltungen:
- DE-A1- 10 109 655
- DE-A1-102010 049 084
- US-A- 5 257 853
- US-B1- 6 183 045

## Beschreibung

### Stand der Technik

Die vorliegende Erfindung geht aus von einer Befestigungsanordnung nach dem Oberbegriff des Anspruchs 1. Eine solche Befestigungsanordnung ist zum Beispiel aus der US 5 257 853 A bekannt.

Darüber hinaus offenbart beispielsweise die Druckschrift DE 10 2007 034 496 A1 eine Kopfstütze mit einer als Kopfanlageteil fungierenden Schale, welche beweglich an einer bügelförmig ausgebildeten Haltestange befestigt ist. An einem horizontalen Abschnitt der Haltestange ist ferner eine als Grundkörper fungierende Platte befestigt.

Nachteilig an den bekannten Befestigungsanordnungen ist, dass die Montage des Grundkörpers an der Haltestange stets vergleichsweise aufwändig und somit kostenintensiv ist. Ferner werden häufig Befestigungsarten verwenden, bei welchen der Grundkörper durch mehrere Einzelteile und insbesondere Arretierbolzen an der Haltestange befestigt wird. Eine solche Befestigungsart hat den Nachteil, dass der Grundkörper nicht gesichert ist, wenn bei der Montage ein Fehler unterläuft und beispielsweise die Arretierbolzen versehentlich nicht montiert werden. Die Kopfstütze ist in diesem Fall nicht zuverlässig arretiert, wodurch im Falle eines Unfalls erhebliche Verletzungsrisiko für die Fahrzeuginsassen entsteht.

Schließlich offenbaren die DE 101 09 655 A1 und die US 6 183 045 B1 weitere Beispiele von Kopfstützen, die auf einen vereinfachten, möglichst stabilen bzw. kostengünstigen Aufbau abzielen.

### Offenbarung der Erfindung

Es ist die Aufgabe der vorliegenden Erfindung eine Befestigungsanordnung zur Verfügung zu stellen, welche eine einfachere und schnellere Montage unter Verwendung von weniger Einzelteilen ermöglicht, so dass die Gefahr einer fehlerhaften Montage verringert wird. Gelöst wird diese Aufgabe durch eine Befestigungsanordnung für eine Kopfstütze, insbesondere für einen Fahrzeugsitz, mit den Merkmalen des Anspruchs 1, wobei die Befestigungsanordnung einen Grundkörper aufweist, welcher zur Halterung eines Kopfanlageteils vorgesehen ist, wobei der Grundkörper mittels eines Befestigungselements an einer Haltestange fixierbar ist und wobei das Befestigungselement einstückig mit dem Grundkörper verbunden ist.

Die erfindungsgemäße Vorrichtung hat gegenüber dem Stand der Technik den Vorteil, dass das Befestigungselement einstückig mit dem Grundkörper verbunden ist, so dass die Gefahr eines versehentlichen "Vergessens" des Befestigungselements bei der Montage der Befestigungsanordnung reduziert wird. Darüber hinaus wird die Montage erheblich vereinfacht, da kein zusätzlicher Montageschritt zur Bereitstellung des Befestigungselements notwendig ist, sondern das Befestigungselement unmittelbar zur Montage bereit steht und korrekt vorpositioniert ist. Zudem werden die Herstellungskosten gesenkt, da keine separaten Befestigungselemente hergestellt werden müssen. Die Haltestange umfasst insbesondere einen Haltebügel, dessen Enden in Führungsaufnahmen einer Rückenlehne gesteckt werden. Am Grundkörper wird vorzugsweise ein gepolstertes Kopfanlageteil befestigt. Denkbar ist, dass das Kopfanlageteil relativ zum Grundkörper verschiebbar und arretierbar am Grundkörper befestigt wird, um einen Längs-, Höhen- und/oder Winkeleinstellungsmechanismus in die Kopfstütze zu implementieren. Alternativ ist das Kopfanlageteil starr mit dem Grundkörper gekoppelt, um eine Kopfstützte ohne zusätzliche Verstellmöglichkeiten bereitzustellen. Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass das Befestigungselement eine relativ zum Grundkörper um eine Schwenkachse schwenkbare Befestigungslasche umfasst, wobei die Befestigungslasche von einem Freigabezustand, in welchem der Grundkörper und die Haltestange relativ zueinander vorpositionierbar sind, und einem Verriegelungszustand, in welchem der Grundkörper und die Haltestange durch die Befestigungslasche aneinander fixiert sind, verschwenkbar ist. In vorteilhafter Weise muss bei der Montage der Befestigungsanordnung die Befestigungslasche lediglich um die Schwenkachse verschwenkt werden. Einerseits wird der Montagevorgang hierdurch erheblich vereinfacht und beschleunigt und andererseits ist sofort ersichtlich, wenn eine Befestigungsanordnung in sicherheitsrelevanter Weise nicht korrekt montiert ist, da in diesem Fall die Befestigungslasche noch im Freigabezustand befindlich ist. Die Schwenkachse der Befestigungslasche verläuft vorzugsweise parallel zu einem horizontalen Abschnitt der Haltestange. Die Befestigungslasche ist vorzugsweise über ein Filmscharnier schwenkbar an den Grundkörper angebunden, wobei vorzugsweise der Grundkörper, das Filmscharnier und die Befestigungslasche einstückig aus dem gleichen Kunststoffmaterial gefertigt sind. In vorteilhafter Weise ist die Befestigungsanordnung somit vergleichsweise kostengünstig in Kunststoff herstellbar.

Gemäß einer bevorzugten Ausführungsform der vorliegenden Erfindung ist vorgesehen, dass die Befestigungslasche wenigstens ein Rastelement und der Grundkörper wenigstens ein Gegenrastelement umfasst, wobei das Rastelement und das Gegenrastelement im Verriegelungszustand miteinander verrastet sind. In vorteilhafter Weise wird die Befestigungslasche durch Verrasten des Rastelements mit dem Gegenrastelement im Verriegelungszustand fixiert, so dass eine versehentliche Öffnung der Befestigungslasche und insbesondere eine ungewollte Rücküberführung vom Verriegelungszustand in den Freigabezustand unterbunden werden. Denkbar ist, dass die Befestigungslasche im Verriegelungszustand nicht auf einer Seite des Haltebügels angeordnet ist, in welche die zu erwartende Hauptbelastungsrichtung zeigt, beispielsweise im Falle eines Unfalls. Die Befestigungslasche ist daher beispielsweise entlang der Fahrtrichtung (x-Richtung) nicht vor oder hinter dem Haltebügel, sondern vielmehr in vertikaler Richtung (z-Richtung) über oder unter dem Haltebügel angeordnet. Das Rastelement ist vorzugsweise einstückig mit der Befestigungslasche und das Gegenrastelement einstückig mit dem Grundkörper ausgebildet. Die Rast-und Gegenrastelemente umfassen vorzugsweise sich gegenseitig form- und/oder kraftschlüssig hintergreifende Rastnasen.

Gemäß einer bevorzugten Ausführungsform der vorliegenden Erfindung ist vorgesehen, dass der Grundkörper wenigstens eine Durchgangsöffnung zur Aufnahme der Haltestange aufweist, wobei die Haltestange im Freigabezustand in die Durchgangsöffnung einschiebbar ist und im Verriegelungszustand durch die Befestigungslasche in der Durchgangsöffnung fixiert ist. In vorteilhafter Weise ist der Grundkörper durch die Wandung der Durchgangsöffnung bezüglich senkrecht zur axialen Richtung der Durchgangsöffnung wirkenden Kräften formschlüssig fixiert.

Gemäß einer bevorzugten Ausführungsform der vorliegenden Erfindung ist vorgesehen, dass der Grundkörper wenigstens eine Einbuchtung aufweist, welche zur formschlüssigen Aufnahme wenigstens eines Teilbereichs der Haltestange vorgesehen ist, wobei insbesondere die Haltestange im Freigabezustand in der Einbuchtung anordbar ist und im Verriegelungszustand durch die Befestigungslasche in der Einbuchtung fixiert ist. In vorteilhafter Weise wird die Haltestange zumindest teilweise formschlüssig in der Einbuchtung gehalten, so dass auf den Grundkörper wirkende Beschleunigungskräfte direkt auf die Haltestange übertragen werden. Die Formgebung der Einbuchtung ist hierfür vorzugsweise auf die äußere Formgebung der Haltestange angepasst. Vorzugsweise weist der Grundkörper wenigstens zwei verschieden ausgebildete Einbuchtungen auf, welche zur formschlüssigen Aufnahme jeweils eines Teilbereichs zweier unterschiedlich ausgebildeter und modular austauschbarer Haltestangen vorgesehen sind. In vorteilhafter Weise kann der gleiche Grundkörper somit für verschiedene Geometrien von Haltestangen und somit beispielsweise für verschiedene Typen von Fahrzeugsitzen verwendet werden,

Gemäß einer bevorzugten Ausführungsform der vorliegenden Erfindung ist vorgesehen, dass im Verriegelungszustand ein horizontaler Abschnitt der Haltestange zwischen der Befestigungslasche und dem Grundkörper formschlüssig und/oder kraftschlüssig eingeschlossen ist. In vorteilhafter Weise wird somit eine vereinfachte Montage der Befestigungsanordnung ermöglicht, da der Haltebügel lediglich von oben (aus Z-Richtung) in die Durchgangsöffnungen soweit eingeschoben werden muss, bis der horizontale Abschnitt in der Einbuchtung angeordnet ist. Anschließend wird die Befestigungslasche aus dem Freigabezustand über den horizontalen Abschnitt in den Verriegelungszustand geschwenkt und dort verrastet. Ein weiterer Gegenstand der vorliegenden Erfindung ist eine Kopfstütze aufweisend die erfindungsgemäße Befestigungsanordnung, wobei die Kopfstütze ein Kopfanlageteil und eine als Haltebügel ausgebildete Haltestange aufweist, wobei das Kopfanlageteil starr oder beweglich am Grundkörper befestigt ist und wobei der Grundkörper mittels des Befestigungselements starr am Haltebügel befestigt ist.

Ein weiterer Gegenstand der vorliegenden Erfindung ist ferner ein Verfahren zur Montage einer Befestigungsanordnung für eine solche Kopfstütze, wobei in einem ersten Montageschritt ein Grundkörper und eine Haltestange relativ zueinander vorpositioniert werden und wobei in einem zweiten Montageschritt der Grundkörper und die Haltestange relativ zueinander fixiert werden, dadurch gekennzeichnet, dass im zweiten Montageschritt eine Befestigungslasche um eine Schwenkachse von einem Freigabezustand in einen Verriegelungszustand verschwenkt wird. In vorteilhafter Weise wird die Herstellungszeit aufgrund des vereinfachten Montageverfahrens verkürzt und somit werden die Herstellungskosten für die Befestigungsanordnung gesenkt. Vorzugsweise wird im ersten Montageschritt die Haltestange in eine Durchgangsöffnung des Grundkörpers geschoben und/oder wenigstens ein Teilbereich der Haltestange in eine Einbuchtung des Grundkörpers angeordnet, wobei die Befestigungslasche im ersten Montageschritt im Freigabezustand verbleibt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Grundkörpers einer Befestigungsanordnung gemäß einer beispielhaften Ausführungsform der vorliegenden Erfindung.
- **Figur 2**: zeigt eine schematische Ansicht eines Grundkörpers befestigt an einer Haltestange der Befestigungsanordnung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

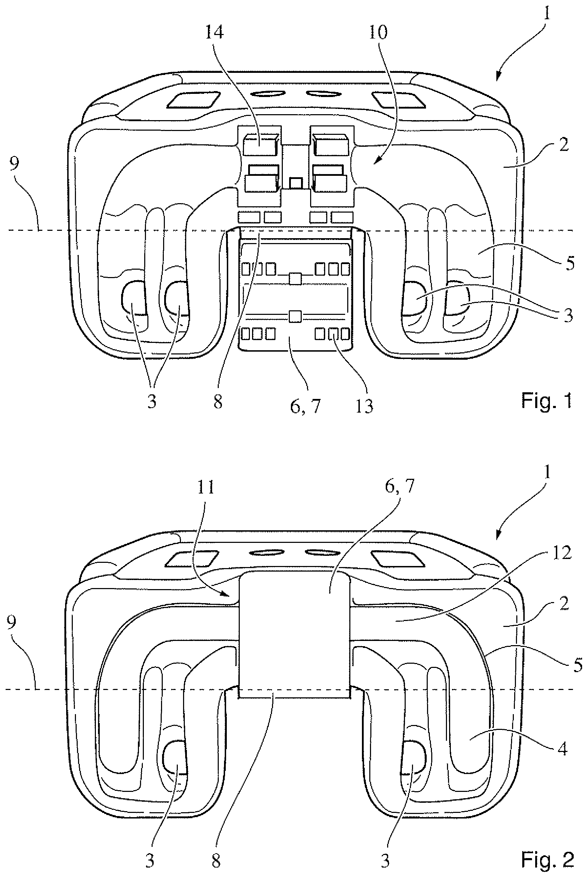

In **Figur 1** ist eine schematische Ansicht eines Grundkörpers 2 einer Befestigungsanordnung 1 gemäß einer beispielhaften Ausführungsform der vorliegenden Erfindung dargestellt. Der Grundkörper 2 weist Durchgangsöffnungen 3 auf, in welche eine als Haltebügel ausgebildete Haltestange 4 einsteckbar ist (siehe Figur 2). Ferner ist in den Grundkörper 2 eine Einbuchtung 5 eingebracht, dessen Formgebung einer äußeren Form eines Teilbereichs der Haltestange 4 entspricht.

Ferner weist die Befestigungsanordnung 1 ein Befestigungselement 6 auf, welche in Form einer Befestigungslasche 7 ausgebildet ist. Die Befestigungslasche 7 ist über ein Filmscharnier 8 drehbar um eine Schwenkachse 9 mit dem Grundkörper 2 verbunden.

Die Befestigungslasche 7 weist eine Mehrzahl von Rastelementen 13 auf, welche zum Verrasten mit am Grundkörper 2 ausgebildeten Gegenrastelementen 14 vorgesehen sind. Im vorliegenden Beispiel sind die Rastelemente 13 als Rasthaken ausgebildet, welche im Rastfall Hinterschneidungen der Gegenrastelemente 14 hintergreifen.

Der Grundkörper 2, das Filmscharnier 8 und die Befestigungslasche 7 sind als einteiliges Kunststoffbauteil, beispielsweise ein Spritzguss- oder Tiefziehformteil, ausgebildet.

Aufgrund des Filmscharniers 8 kann die Befestigungslasche 7 um die Schwenkachse 9 zwischen einer Freigabestellung 10 (siehe Figur 1) und einer Verriegelungsstellung 11 (siehe Figur 2) verschwenkt werden. In der Freigabestellung 10 steht die Befestigungslasche 7 von dem Grundkörper 2 ab und die Einbuchtung 5 ist frei zugänglich. In der Verriegelungsstellung 11 ist die Befestigungslasche 7 in Richtung des Grundkörpers 2 auf die Einbuchtung 5 verschwenkt, so dass ein in der Einbuchtung 5 im Bereich der Befestigungslasche 7 befindlicher horizontaler Abschnitt 12 der Haltestange 4 formschlüssig zwischen der Wandung der Einbuchtung 6 und der Befestigungslasche 7 gehalten und insbesondere kraftschlüssig eingeklemmt wird (Siehe Figur 2). Die Befestigungsanordnung 1 weist im vorliegenden Beispiel mehrere Durchgangsöffnungen 3 auf und die Einbuchtung 5 weist im vorliegenden Beispiel zwei verschiedene Formverläufe auf, so dass der Grundkörper 2 modular mit unterschiedlichen Arten von Haltestangen 4 verwendet werden kann.

Zur Montage des Grundkörpers 2 an der Haltestange 4 wird die Haltestange 4 durch die Durchgangsöffnungen 3 gefädelt, bis der horizontale Abschnitt 12 formschlüssig durch die Einbuchtung 5 aufgenommen ist. Anschließend wird das Befestigungslasche 7 von der Freigabestellung 10 in die Verriegelungsstellung 1 verschwenkt.

In **Figur 2** ist eine schematische Ansicht eines Grundkörpers 2 zusammen mit einer am Grundkörper 2 befestigten Haltestange 4 dargestellt. Die Befestigungslasche 7 ist in die Verriegelungsstellung 11 überführt, so dass der horizontale Abschnitt 12 zwischen der Befestigungslasche 7 und der Wandung der Einbuchtung 5 fixiert ist. Ein Verrasten der Rastelemente 13 mit den Gegenrastelementen 14 dient dazu, dass die Befestigungslasche 7 in der Verriegelungsstellung 11 fixiert wird und ein unbeabsichtigtes Öffnen der Befestigungslasche 7 verhindert wird. Denkbar ist, dass die Gegenrastelemente 14 ferner eine weitere Hinterschneidung zum Verrasten mit der Haltestange 4 aufweisen.

Die freien Enden des Haltebügels können insbesondere in entsprechende Führungen einer Rückenlehne eins Fahrzeugsitzes gesteckt werden. Der Haltebügel ist insbesondere ein mehrfach gebogenes Metallrohr. An dem Grundkörper 2 ist ferner ein gepolstertes Kopfanlageteil starr oder verstellbar zu befestigen.

### Bezugszeichenliste

- 1: Befestigungsanordnung
- 2: Grundkörper
- 3: Durchgangsöffnung
- 4: Haltestange
- 5: Einbuchtung
- 6: Befestigungselement
- 7: Befestigungslasche
- 8: Filmscharnier
- 9: Schwenkachse
- 10: Freigabestellung
- 11: Verriegelungsstellung
- 12: horizontaler Abschnitt
- 13: Rastelemente
- 14: Gegenrastelemente

## Patentansprüche

1. Befestigungsanordnung (1) für eine Kopfstütze, insbesondere für einen Fahrzeugsitz, wobei die Befestigungsanordnung (1) einen Grundkörper (2) aufweist, welcher zur Halterung eines Kopfanlageteils vorgesehen ist, wobei der Grundkörper (2) mittels eines Befestigungselements (6) an einer Haltestange (4) fixierbar ist, wobei das Befestigungselement (6) einstückig mit dem Grundkörper (2) verbunden ist, **dadurch gekennzeichnet, dass** das Befestigungselement (6) eine relativ zum Grundkörper (2) um eine Schwenkachse (9) schwenkbare Befestigungslasche (7) umfasst, wobei die Befestigungslasche (7) von einem Freigabezustand (10), in welchem der Grundkörper (2) und die Haltestange (4) relativ zueinander vorpositionierbar sind, und einem Verriegelungszustand (11), in welchem der Grundkörper (2) und die Haltestange (4) durch die Befestigungslasche (7) aneinander fixiert sind, verschwenkbar ist.

2. Befestigungsanordnung (1) nach Anspruch 1, wobei die Befestigungslasche (7) wenigstens ein Rastelement (13) und der Grundkörper (2) wenigstens ein Gegenrastelement (14) umfasst, wobei das Rastelement (13) und das Gegenrastelement (14) im Verriegelungszustand (11) miteinander verrastet sind.

3. Befestigungsanordnung (1) nach einem der Ansprüche 1 oder 2, wobei der Grundkörper (2) wenigstens eine Durchgangsöffnung (3) zur Aufnahme der Haltestange (4) aufweist, wobei die Haltestange (4) im Freigabezustand (10) in die Durchgangsöffnung (3) einschiebbar ist und im Verriegelungszustand (11) durch die Befestigungslasche (7) in der Durchgangsöffnung (3) fixiert ist.

4. Befestigungsanordnung (1) nach einem der Ansprüche 1 bis 3, wobei der Grundkörper (2) wenigstens eine Einbuchtung (5) aufweist, welche zur formschlüssigen Aufnahme wenigstens eines Teilbereichs der Haltestange (4) vorgesehen ist, wobei insbesondere die Haltestange (4) im Freigabezustand (10) in der Einbuchtung (5) anordbar ist und im Verriegelungszustand (11) durch die Befestigungslasche (7) in der Einbuchtung (5) fixiert ist.

5. Befestigungsanordnung (1) nach Anspruch 4, wobei der Grundkörper (2) wenigstens zwei verschieden ausgebildete Einbuchtungen (5) aufweist, welche zur formschlüssigen Aufnahme jeweils eines Teilbereichs zweier unterschiedlich ausgebildeter und modular austauschbarer Haltestangen (4) vorgesehen sind.

6. Befestigungsanordnung (1) nach einem der vorhergehenden Ansprüche, wobei im Verriegelungszustand (11) ein horizontaler Abschnitt (12) der Haltestange (4) zwischen der Befestigungslasche (7) und dem Grundkörper (2) formschlüssig und/oder kraftschlüssig eingeschlossen ist.

7. Befestigungsanordnung (1) nach Anspruch 6, wobei die Schwenkachse (9) der Befestigungslasche (7) parallel zum horizontalen Abschnitt (12) verläuft.

8. Befestigungsanordnung (1) nach einem der vorhergehenden Ansprüche, wobei die Befestigungslasche (7) über ein Filmscharnier (8) schwenkbar an den Grundkörper (2) angebunden ist, wobei vorzugsweise der Grundkörper (2), das Filmscharnier (8) und die Befestigungslasche (7) einstückig aus dem gleichen Kunststoffmaterial gefertigt sind.

9. Kopfstütze aufweisend eine Befestigungsanordnung (1) nach einem der vorhergehenden Ansprüche, wobei die Kopfstütze ein Kopfanlageteil und eine als Haltebügel ausgebildete Haltestange (4) aufweist, wobei das Kopfanlageteil starr oder beweglich am Grundkörper (2) befestigt ist und wobei der Grundkörper (2) mittels des Befestigungselements (6) starr am Haltebügel befestigt ist.

10. Verfahren zur Montage einer Befestigungsanordnung (1) für eine Kopfstütze nach einem der vorhergehenden Ansprüche, wobei in einem ersten Montageschritt ein Grundkörper (2) und eine Haltestange (4) relativ zueinander vorpositioniert werden und wobei in einem zweiten Montageschritt der Grundkörper (2) und die die Haltestange (4) relativ zueinander fixiert werden, **dadurch gekennzeichnet, dass** im zweiten Montageschritt eine Befestigungslasche (7) um eine Schwenkachse (9) von einer Freigabezustand (10) in einen Verriegelungszustand (11) verschwenkt wird.

11. Verfahren nach Anspruch 10, wobei im ersten Montageschritt die Haltestange (4) in eine Durchgangsöffnung (3) des Grundkörpers (2) geschoben wird und/oder wenigstens ein Teilbereich der Haltestange (4) in eine Einbuchtung (5) des Grundkörpers (2) angeordnet wird, wobei die Befestigungslasche (7) im ersten Montageschritt im Freigabezustand (10) verbleibt.

## Claims

1. Fastening arrangement (1) for a head restraint, in particular for a vehicle seat, wherein the fastening arrangement (1) has a basic body (2) which is provided for holding a head contact part, wherein the basic body (2) can be fixed to a holding rod (4) by means of a fastening element (6), wherein the fastening element (6) is integrally connected to the basic body (2), **characterized in that** the fastening element (6) comprises a fastening tab (7) which is pivotable about a pivot axis (9) relative to the basic body (2), wherein the fastening tab (7) is pivotable from a release state (10), in which the basic body (2) and the holding rod (4) can be pre-positioned relative to each other, and a locking state (11) in which the basic body (2) and the holding rod (4) are fixed to each other by the fastening tab (7) .

2. Fastening arrangement (1) according to Claim 1, wherein the fastening tab (7) comprises at least one latching element (13) and the basic body (2) comprises at least one mating latching element (14), wherein the latching element (13) and the mating latching element (14) are latched together in the locking state (11).

3. Fastening arrangement (1) according to either of Claims 1 and 2, wherein the basic body (2) has at least one through opening (3) for receiving the holding rod (4), wherein, in the release state (10), the holding rod (4) can be pushed into the through opening (3) and, in the locking state (11), is fixed in the through opening (3) by the fastening tab (7).

4. Fastening arrangement (1) according to one of Claims 1 to 3, wherein the basic body (2) has at least one indentation (5) which is provided for the form-fitting reception of at least a partial region of the holding rod (4), wherein in particular, in the release state (10), the holding rod (4) can be arranged in the indentation (5) and, in the locking state (11), is fixed in the indentation (5) by the fastening tab (7).

5. Fastening arrangement (1) according to Claim 4, wherein the basic body (2) has at least two differently designed indentations (5) which are provided for the form-fitting reception of in each case a partial region of two differently designed and modularly interchangeable holding rods (4).

6. Fastening arrangement (1) according to one of the preceding claims, wherein, in the locking state (11), a horizontal portion (12) of the holding rod (4) is enclosed in a form-fitting and/or force-fitting manner between the fastening tab (7) and the basic body (2).

7. Fastening arrangement (1) according to Claim 6, wherein the pivot axis (9) of the fastening tab (7) runs parallel to the horizontal portion (12).

8. Fastening arrangement (1) according to one of the preceding claims, wherein the fastening tab (7) is connected pivotably to the basic body (2) via a film hinge (8), wherein preferably the basic body (2), the film hinge (8) and the fastening tab (7) are manufactured integrally from the same plastics material.

9. Head restraint having a fastening arrangement (1) according to one of the preceding claims, wherein the head restraint has a head contact part and a holding rod (4) designed as a holding bow, wherein the head contact part is fastened rigidly or movably to the basic body (2), and wherein the basic body (2) is fastened rigidly to the holding bow by means of the fastening element (6).

10. Method for installing a fastening arrangement (1) for a head restraint according to one of the preceding claims, wherein, in a first installation step, a basic body (2) and a holding rod (4) are pre-positioned relative to each other, and wherein, in a second installation step, the basic body (2) and the the holding rod (4) are fixed relative to each other, **characterized in that**, in the second installation step, a fastening tab (7) is pivoted about a pivot axis (9) from a release state (10) into a locking state (11).

11. Method according to Claim 10, wherein, in the first installation step, the holding rod (4) is pushed into a through opening (3) of the basic body (2) and/or at least a partial region of the holding rod (4) is arranged in an indentation (5) of the basic body (2), wherein the fastening tab (7) remains in the release state (10) in the first installation step.

## Revendications

1. Dispositif de fixation (1) pour appui-tête, en particulier pour siège de véhicule, le dispositif de fixation (1) présentant un corps de base (2) qui est prévu pour soutenir une pièce en contact avec la tête, le corps de base (2) pouvant être fixé au moyen d'un élément de fixation (6) à une barre de retenue (4),
l'élément de fixation (6) étant raccordé au corps de base (2) en formant une seule pièce, **caractérisé en ce que** l'élément de fixation (6) comprend une languette de fixation (7) pivotable par rapport au corps de base (2) autour d'un axe de pivotement (9), la languette de fixation (7) étant pivotable entre un état de dégagement (10) dans lequel le corps de base (2) et la barre de retenue (4) peuvent être prépositionnés l'un par rapport à l'autre et un état de verrouillage (11) dans lequel le corps de base (2) et la barre de retenue (4) sont fixés l'un à l'autre par la languette de fixation (7).

2. Dispositif de fixation (1) selon la revendication 1, dans lequel la languette de fixation (7) comprend au moins un élément d'enclenchement (13) et le corps de base (2) au moins un contre-élément d'enclenchement (14), l'élément d'enclenchement (13) et le contre-élément d'enclenchement (14) étant enclenchés l'un dans l'autre dans l'état de verrouillage (11).

3. Dispositif de fixation (1) selon une des revendications 1 ou 2, dans lequel le corps de base (2) présente au moins un orifice traversant (3) destiné à recevoir la barre de retenue (4), la barre de retenue (4) étant, dans l'état de dégagement (10), insérable dans l'orifice traversant (3) et étant fixée dans l'orifice traversant (3) par la languette de fixation (7) dans l'état de verrouillage (11).

4. Dispositif de fixation (1) selon une des revendications 1 à 3, dans lequel le corps de base (2) présente au moins un renfoncement (5) qui est prévu pour recevoir en correspondance géométrique au moins une zone partielle de la barre de retenue (4), la barre de retenue (4) pouvant en particulier être disposée dans le renfoncement (5) dans l'état de dégagement (10) et étant fixée dans le renfoncement (5) par la languette de fixation (7) dans l'état de verrouillage.

5. Dispositif de fixation (1) selon la revendication 4, dans lequel le corps de base (2) présente au moins deux renfoncements de conformation différente (5) qui sont prévus pour recevoir en correspondance géométrique respectivement une zone partielle de deux barres de retenue (4) de conformation différente et échangeables de manière modulaire.

6. Dispositif de fixation (1) selon une des revendications précédentes, dans lequel, dans l'état de verrouillage (11), une section horizontale (12) de la barre de retenue (4) est intégrée entre la languette de fixation (7) et le corps de base (2) en correspondance géométrique et/ou en correspondance mécanique.

7. Dispositif de fixation (1) selon la revendication 6, dans lequel l'axe de pivotement (9) de la languette de fixation (7) s'étend parallèlement à la section horizontale (12).

8. Dispositif de fixation (1) selon une des revendications précédentes, dans lequel la languette de fixation (7) est reliée par une charnière en film (8) de manière pivotable au corps de base (2), le corps de base (2), la charnière en film (8) et la languette de fixation (7) étant fabriqués de préférence en une seule pièce à partir de la même matière plastique.

9. Appui-tête présentant un dispositif de fixation (1) selon une des revendications précédentes, cet appui-tête présentant une pièce en contact avec la tête et une barre de retenue (4) réalisée sous forme d'étrier de retenue, la pièce en contact avec la tête étant fixée de manière rigide ou mobile au corps de base (2) et le corps de base (2) étant fixé de manière rigide à l'étrier de retenue au moyen de l'élément de fixation (6).

10. Procédé de montage d'un dispositif de fixation (1) pour un appui-tête selon une des revendications précédentes, dans lequel, dans une première étape de montage, un corps de base (2) et une barre de retenue (4) sont prépositionnés l'un par rapport à l'autre et, dans une seconde étape de montage, le corps de base (2) et la la barre de retenue (4) sont fixés l'un par rapport à l'autre, **caractérisé en ce que**, dans la seconde étape de montage, une languette de fixation (7) est pivotée autour d'un axe de pivotement (9) depuis un état de dégagement (10) vers un état de verrouillage (11).

11. Procédé selon la revendication 10, dans lequel, dans la première étape de montage, la barre de retenue (4) est poussée dans un orifice traversant (3) du corps de base (2) et/ou au moins une zone partielle de la barre de retenue (4) est disposée dans un renfoncement (5) du corps de base (2), la languette de fixation (7) restant dans l'état de dégagement (10) dans la première étape de montage.
